# EUROPÄISCHE PATENTSCHRIFT

(11) **EP 3 840 198 B1**
(45) Veröffentlichungstag und Bekanntmachung des Hinweises auf die Patenterteilung: **06.09.2023**
(21) Anmeldenummer: 20214444.0
(22) Anmeldetag: 16.12.2020
(51) Int. Cl.: H02K 15/04, B21F 1/00

(54) **VORRICHTUNG UND VERFAHREN ZUM BIEGEN VON DRAHT FÜR EIN MASCHINENELEMENT EINER ELEKTRISCHEN MASCHINE**
DEVICE AND METHOD FOR BENDING WIRE FOR A MACHINE ELEMENT OF AN ELECTRIC MACHINE
DISPOSITIF ET PROCÉDÉ DE FLEXION DU FIL POUR UN ÉLÉMENT DE MACHINE D'UNE MACHINE ÉLECTRIQUE

(30) Priorität: 17.12.2019 DE 102019134785
(43) Veröffentlichungstag der Anmeldung: 23.06.2021
(73) Patentinhaber: Grob-Werke GmbH & Co. KG, 87719 Mindelheim (DE)
(72) Erfinder: Hörtrich, Roland, 87719 Mindelheim (DE); Sinner, Michael, 87730 Bad Grönenbach (DE)
(74) Vertreter: KASTEL Patentanwälte PartG mbB

(56) Entgegenhaltungen:
- DE-A1-102014 226 224
- DE-A1-102018 108 656
- US-A1- 2007 180 681
- US-A1- 2018 233 995
- US-A1- 2019 109 524

## Beschreibung

Die Erfindung betrifft eine 3D-Biegevorrichtung zum Biegen eines Drahts, der mit einem ersten Schenkel, einem zweiten Schenkel sowie einem abgewinkelten Abschnitt zwischen den Schenkeln ausgebildet ist, in eine 3-dimensionale Form für die Herstellung von Maschinenelementen elektrischer Maschinen. Weiter betrifft die Erfindung ein 3D-Biegeverfahren zum Biegen eines Drahts, der mit einem ersten Schenkel, einem zweiten Schenkel sowie einem abgewinkelten Abschnitt zwischen den Schenkeln ausgebildet ist, in eine 3-dimensionale Form für die Herstellung von Maschinenelementen elektrischer Maschinen.

Eine derartige 3D-Biegevorrichtung und ein derartiges 3D-Biegeverfahren sind aus der US 2014/0223727A1 und der DE 10 2018 108 656 A1 bekannt, auf die hiernach noch näher eingegangen wird. Weitere 3D-Biegevorrichtungen und 3D-Biegeverfahren sind aus der US 2018/0233995 A1, der DE 10 2014 226 224 A1, der US 2007/0180681 A1 und der US 2019/0109524 A1 bekannt.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Zur Herstellung von Maschinenelementen derartiger elektrischer Maschinen, wie beispielsweise Statoren oder Rotoren, ist es in vielen Fällen erforderlich, elektrisch leitende Drähte zu formen, miteinander zu verbinden, zu schneiden, oder auf sonstige Weise zu verarbeiten. Der Draht kann dabei insbesondere auch einen rechteckigen Querschnitt haben, als Flach-, Vierkant oder Profildraht ausgestattet sein.

Bei der Herstellung von Elektromotoren für Kraftfahrzeuge werden zumeist Produktionsverfahren angewendet, die eine besonders wirtschaftliche Fertigung leistungsfähiger Bauteile für Elektromotoren ermöglichen. Hierzu gehört insbesondere das Hairpin-Verfahren. Dabei werden Spulenwicklungen, insbesondere des Stators, aus einer Vielzahl von Drahtstücken gebildet, deren Enden miteinander verbunden werden. Beispielsweise beschreiben hierzu die EP 2684283B1, die EP 1554794B1 und die EP 1041696B1 Vorrichtungen und Ver-fahren zum Verbinden von Drahtenden von Hairpins zum Bilden von Statorwicklungen elektrischer Maschinen, bei denen die Drahtenden miteinander verschweißt werden. Die Drahtstücke sind jeweils mit einem ersten Schenkel, einem zweiten Schenkel sowie einem abgewinkelten Abschnitt zwischen den Schenkeln versehen. Beispielsweise können die Drahtstücke, im Folgenden auch Pins genannt, U-förmig mit einer Dachbiegung als abgewinkeltem Abschnitt ausgebildet sein, es ist auch eine gerade Form, ein sogenannter I-Pin möglich.

Dem Herstellungsprozess der Elektromotoren ist der Herstellungsprozess der einzelnen Drähte, also insbesondere von Hairpins oder I-Pins vorgelagert. Die einzelnen, elektrisch leitfähigen Drähte oder Drahtstücke werden anschließend möglichst dicht gepackt und zu einer durchgehenden elektrisch leitenden Wicklung verschweißt.

Bei dem Herstellprozess der einzelnen Drähte werden diese in die gewünschte Form vorgebogen. Dies erfolgt meist mit mehreren Biegungen, um z.B. eine Dachbiegung oder eine sonstige gewünschte Form des abgewinkelten Abschnitts zu erzeugen. Der abgewinkelte Abschnitt enthält oft auch eine Sprungbiegung, deren Form, Funktion und Durchführung genauer in der DE 10 2018 106 978 A1 beschrieben und gezeigt ist. Außerdem wird die Dachform oder eine Abwinklung - insbesondere Kröpfung - zwischen Schenkeln eines I-Pin geformt. Beispiele für Vorrichtungen und Verfahren für das Biegen einer Dachform sind in der DE 10 2018 106 980 A1 beschrieben und gezeigt.

Da die Bauteile elektrischer Maschinen meist ringförmig um eine Drehachse der elektrischen Maschine herum ausgebildet sind, und eine Spulenwicklung entsprechend kranzförmig oder ringförmig auszubilden ist, sollen die Drähte außerdem an die Krümmung des entsprechenden Bauteils angepasst geformt werden. Hierzu dient das sogenannte Freiformbiegen oder 3D-Biegen, wozu die aus den vorgenannten Druckschriften US 2014/0223727A1 und DE 10 2018 108 656 A1 bekannten Vorrichtungen und Verfahren eingesetzt werden können.

Die Vorrichtung und das Verfahren nach der US 2014/0223727 A1 und nach der US 2019/0109524 A1 nutzen hierzu ein Gesenk. Beim Biegen durch das Gesenk wird der Draht über Konturwerkzeuge in seine Form gebracht. Wie aus der obigen Überlegung ersichtlich, ist die Kontur an das jeweilige Bauteil angepasst. Unterschiedlich große Statoren mit unterschiedlichen Spulenwicklungen erfordern unterschiedlich geformte abgewinkelte Abschnitte zwischen den Schenkeln und somit unterschiedliche Konturen für diese abgewinkelten Abschnitte. Bei dem Biegen mittels eines Gesenks muss für jede unterschiedliche zu formende Kontur ein eigenes entsprechendes Konturwerkzeug angefertigt und eingesetzt werden.

Die DE 10 2018 108 656 A1 zeigt demgegenüber eine verbesserte Vorrichtung und ein verbessertes Verfahren, bei dem die 3D-Biegung über einen feststehenden und einen schwenkbaren Greifer erfolgt.

Die Erfindung hat sich zur Aufgabe gestellt, eine 3D-Biegevorrichtung und ein 3D-Biegeverfahren hinsichtlich leichterer Anpassbarkeit für unterschiedliche Maschinenelemente und hinsichtlich eines geringeren fertigungstechnischen Aufwands weiter zu verbessern.

Zum Lösen dieser Aufgabe schafft die Erfindung eine 3D-Biegevorrichtung und ein 3D-Biegeverfahren nach den unabhängigen Ansprüchen. Vorteilhafte Ausgestaltungen sind Gegenstand der Unteransprüche.

Die Erfindung schafft gemäß einem ersten Aspekt davon eine 3D-Biegevorrichtung zum Biegen eines Drahts, der mit einem ersten Schenkel, einem zweiten Schenkel sowie einem abgewinkelten Abschnitt zwischen den Schenkeln ausgebildet ist, in eine 3-dimensionale Form für die Herstellung von Maschinenelementen elektrischer Maschinen, umfassend:
ein erstes Halteelement zum Halten des Drahts an dem ersten Schenkel und ein zweites Halteelement zum Halten des Drahts an dem zweiten Schenkel,
eine erste Relativbewegungseinrichtung zum relativen Bewegen des ersten Halteelements und des zweiten Halteelements in einer ersten Relativbewegung mit einer ersten Bewegungsachse, um einen Torsionswinkel des ersten Schenkels relativ zu einer gedachten Verbindungslinie zwischen den Mittelachsen der Schenkel zu erzeugen,
eine zweite Relativbewegungseinrichtung zum relativen Bewegen des ersten Halteelements und des zweiten Halteelements in einer zweiten Relativbewegung mit einer zweiten Bewegungsachse, um einen Torsionswinkel des zweiten Schenkels relativ zu der gedachten Verbindungslinie zwischen den Mittelachsen der Schenkel zu erzeugen, und eine dritte Relativbewegungseinrichtung zum relativen Bewegen des ersten Halteelements zu dem zweiten Halteelement in einer dritten Relativbewegung mit einer dritten Bewegungsachse, um den Abstand zwischen den Mittelachsen der Schenkel zu verändern.

Es ist bevorzugt, dass die erste Relativbewegungseinrichtung eine erste Dreh- oder Verschwenkeinrichtung zum Drehen oder Verschwenken des ersten Halteelements um eine erste Dreh- oder Verschwenkachse als erste Bewegungsachse ist.

Erfindungsgemäß ist vorgesehen, dass die dritte Relativbewegungseinrichtung eine Linearbewegungseinrichtung zum relativen Bewegen des ersten Halteelements und des zweiten Halteelements in Richtung einer ersten Linearbewegungsachse als dritte Bewegungsachse ist.

Es ist bevorzugt, dass das zweite Halteelement feststehend und das erste Halteelement mittels der ersten bis dritten Relativbewegungseinrichtung beweglich ausgebildet ist.

Es ist bevorzugt, dass die zweite Bewegungseinrichtung eine Linearbewegungseinrichtung zum Bewegen des ersten Halteelements in Richtung einer zweiten Linearbewegungsachse als zweite Bewegungsachse ist.

Es ist bevorzugt, dass die zweite Relativbewegungseinrichtung eine zweite Dreh- oder Verschwenkeinrichtung zum Drehen oder Verschwenken des zweiten Halteelements um eine zweite Dreh- oder Verschwenkachse als zweite Bewegungsachse ist.

Es ist bevorzugt, dass die Dreh- oder Verschwenkachse(n) mit wenigstens einer Richtungskomponente parallel zu der Mittelachse des ersten und/oder zweiten Schenkels beim bestimmungsgemäßen Gebrauch des zugeordneten Halteelements verläuft/verlaufen. Besonders bevorzugt fällt beim bestimmungsgemäßen Gebrauch des zugeordneten Halteelements die jeweilige Dreh- oder Verschwenkachse mit der Mittelachse des ersten bzw. zweiten Schenkels zusammen.

Es ist bevorzugt, dass die Linearbewegungsachse(n) mit wenigstens einer Richtungskomponente quer zu der Mittelachse des ersten und/oder zweiten Schenkels beim bestimmungsgemäßen Gebrauch des zugeordneten Halteelements verläuft. Besonders bevorzugt ist beim bestimmungsgemäßen Gebrauch des zugeordneten Halteelements die jeweilige Linearbewegungsachse senkrecht zu der Mittelachse des zugeordneten Schenkels.

Es ist bevorzugt, dass die erste Linearbewegungsachse zumindest mit einer Richtungskomponente senkrecht zu der zweiten Linearbewegungsachse verläuft. Insbesondere spannen die erste und die zweite Linearbewegungsachse eine Bewegungsebene, innerhalb der die Halteelemente frei relativ zueinander bewegbar sind, auf.

Es ist bevorzugt, dass die erste Dreh- oder Verschwenkachse im Wesentlichen parallel zu der zweiten Dreh- oder Verschwenkachse verläuft.

Gemäß einem weiteren Aspekt betrifft die Erfindung ein 3D-Biegeverfahren zum Biegen eines Drahts, der mit einem ersten Schenkel, einem zweiten Schenkel sowie einem abgewinkelten Abschnitt zwischen den Schenkeln ausgebildet ist, in eine 3-dimensionale Form für die Herstellung von Maschinenelementen elektrischer Maschinen, umfassend:
a) Tordieren des ersten Schenkels um einen ersten Torsionswinkel relativ zu einer gedachten Verbindungslinie zwischen den Mittelachsen des ersten und des zweiten Schenkels mithilfe eines ersten Relativbewegens des ersten Schenkels und des zweiten Schenkels mit einer ersten Bewegungsachse,
b) Tordieren des zweiten Schenkels um einen zweiten Torsionswinkel relativ zu einer gedachten Verbindungslinie zwischen den Mittelachsen des ersten und des zweiten Schenkels mithilfe eines zweiten Relativbewegens des ersten Schenkels und des zweiten Schenkels mit einer zweiten Bewegungsachse, und
c) Verändern des Abstandes zwischen den Mittelachsen des ersten und des zweiten Schenkels mithilfe eines dritten Relativbewegens des ersten und des zweiten Schenkels mit einer dritten Bewegungsachse.

Vorzugsweise umfasst das 3D-Biegeverfahren:
Halten des ersten Schenkels mittels eines ersten Halteelements und des zweiten Schenkels mittels eines zweiten Halteelements und Durchführen der Schritte a), b) und c) mittels Relativbewegen des ersten und zweiten Halteelements.

Schritt a) umfasst vorzugsweise den Schritt:
a1) Drehen oder Verschwenken des ersten Schenkels um eine erste Dreh- oder Schwenkachse als erste Bewegungsachse.

Vorzugsweise umfasst Schritt b) den Schritt:
b1) Festhalten des zweiten Schenkels und Drehen oder Verschwenken des ersten Schenkels und Verlagerung der Lage des ersten Schenkels entlang einer zweiten Linearachse als zweite Bewegungsachse.

Vorzugsweise umfasst Schritt b) den Schritt:
b2) Drehen oder Verschwenken des zweiten Schenkels um eine zweite Dreh- oder Schwenkachse als zweite Bewegungsachse.

Erfindungsgemäß umfasst Schritt c) den Schritt:
c1) Relativbewegen des ersten und des zweiten Schenkels entlang einer ersten Linearachse als dritte Bewegungsachse.

Es ist bevorzugt, dass die Dreh- oder Verschwenkachse(n) mit wenigstens einer Richtungskomponente parallel zu der Mittelachse des ersten und/oder zweiten Schenkels verläuft. Besonders bevorzugt liegt die jeweilige Dreh- oder Verschwenkachse auf der Mittelachse des zugeordneten Schenkels.

Es ist bevorzugt, dass die Linearbewegungsachse(n) mit wenigstens einer Richtungsachse quer zu der Mittelachse des ersten und/oder zweiten Schenkels verläuft. Besonders bevorzugt verläuft die jeweilige Linearbewegungsachse senkrecht zu den Mittelachsen des ersten und des zweiten Schenkels.

Es ist bevorzugt, dass die erste Linearbewegungsachse zumindest mit einer Richtungskomponente senkrecht zu der zweiten Linearbewegungsachse verläuft. Besonders bevorzugt spannen die Linearbewegungsachsen eine Bewegungsebene auf, innerhalb der eine Relativbewegung der Mitnehmer über frei wählbar einstellbare Kurven erfolgt.

Es ist bevorzugt, dass die erste Dreh- oder Verschwenkachse im Wesentlichen parallel zu der zweiten Dreh- oder Verschwenkachse verläuft.

Es ist bevorzugt, dass die Schritte a) bis c) gleichzeitig oder zumindest teilweise überlappend durchgeführt werden.

Vorzugsweise umfasst die 3D-Biegevorrichtung gemäß einer der vorstehenden Ausgestaltungen weiter eine Steuerung, die dazu ausgebildet ist, die 3D-Biegevorrichtung zum Durchführen des 3D-Biegeverfahrens nach einer der voranstehenden Ausgestaltungen zu steuern.

Gemäß einem weiteren Aspekt schafft die Erfindung ein Computerprogramm oder Computerprogrammprodukt umfassend Steueranweisungen, die, wenn in eine Steuerung einer 3D-Biegevorrichtung nach einer der voranstehenden Ausgestaltungen geladen, die 3D-Biegevorrichtung veranlassen, das 3D-Biegeverfahren nach einer der voranstehenden Ausgestaltungen durchzuführen.

Bevorzugte Ausgestaltungen der Erfindung betreffen eine Vorrichtung und ein Verfahren zum Biegen von Spulensegmenten.

Im Gegensatz zum Stand der Technik mit der Biegung über ein Gesenk sind keine gesonderten Konturwerkzeuge für unterschiedliche Formen nötig. Außerdem kann der Einfluss von Rückbiegungen durch einfache Versuche und Nachstellarbeiten kompensiert werden, ohne dass Konturwerkzeuge aufwändig nachbearbeitet werden müssen.

Verglichen mit dem bekannten Stand der Technik mit einem schwenkbaren Greifer können Anpassungen vorgenommen werden, ohne dass der vorgelagerte Prozess des Formens des abgewinkelten Abschnitts - Dachbiegung, Kröpfung und/oder Sprungbiegung - verändert werden muss. Insbesondere kann bei Ausführungsformen der Erfindung eine durch die 3D-Biegung verursachte Änderung des Abstands oder des Versatzes der Schenkel zueinander kompensiert oder korrigiert werden. Weiter Vorteile bevorzugter Ausgestaltungen der Erfindung ergeben sich aus der nachfolgenden detaillierten Beschreibung bevorzugter Ausgestaltungen.

Ausführungsbeispiele der Erfindung werden im Folgenden anhand der beigefügten Zeichnungen näher erläutert. Darin zeigt:
- Fig. 1: eine Seitenansicht einer ersten Ausführungsform eines zu biegenden Drahtes in Form eines Hairpins oder U-Pins;
- Fig. 2: eine Seitenansicht einer zweiten Ausführungsform eines zu biegenden Drahtes in Form eines I-Pins;
- Fig. 3: eine Draufsicht auf den zu biegenden Draht von oben in Fig. 1 oder Fig. 2 vor dem 3D-Biegen;
- Fig. 4: eine Draufsicht auf den Draht von oben in Fig. 1 oder Fig. 2 nach dem 3D-Biegen;
- Fig. 5: eine in Axialrichtung gesehene Draufsicht auf ein erstes Ausführungsbeispiel eines Statorblechpakets eines ersten Ausführungsbeispiels eines Stators als Beispiel für ein Maschinenelement einer elektrischen Maschine, in welches Drähte von Fig. 1 und 4 in einer ringförmigen Anordnung einzufügen sind;
- Fig. 6: eine in Axialrichtung gesehene Draufsicht auf ein zweites Ausführungsbeispiel eines Statorblechpakets eines zweiten Ausführungsbeispiels eines Stators als weiteres Beispiel für ein Maschinenelement einer elektrischen Maschine, in welches Drähte von Fig. 1 und 4 in einer ringförmigen Anordnung einzufügen sind;
- Fig. 7: eine Draufsicht auf einen gebogenen Draht nach der 3D-Biegung vergleichbar zu Fig. 4 zur Erläuterung von durch die Biegung zu erreichenden gewünschten Parametern;
- Fig. 8: eine perspektivische Darstellung eines ersten Ausführungsbeispiels einer 3D-Biegevorrichtung zum Durchführen der 3D-Biegung an dem Draht nach den Fig. 1 bis 4 und 7, wobei das erste Ausführungsbeispiel einen stationären Greifer und einen beweglichen Greifer aufweist;
- Fig. 9: eine Grafik mit dem Draht aus Fig. 4 und 7 und Bewegungskurven zur Darstellung der Einstellung und Programmierung der Bewegung des beweglichen Greifers der 3D-Biegevorrichtung von Fig. 8;
- Fig. 10: eine perspektivische Darstellung eines zweiten Ausführungsbeispiels einer 3D-Biegevorrichtung zum Durchführen der 3D-Biegung an dem Draht nach den Fig. 1 bis 4 und 7, wobei das zweite Ausführungsbeispiel einen ersten beweglichen Greifer und einen zweiten beweglichen Greifer aufweist; und
- Fig. 11: eine Darstellung eines stationären und eines beweglichen Greifers bei einer 3D-Biegevorrichtung nach dem Stand der Technik gemäß der DE 10 2018 108 656 A1, um die Unterschiede und deren Wirkungen sowie die Vorteile der erfindungsgemäßen Ausführungsbeispiele gegenüber dem Stand der Technik zu verdeutlichen.

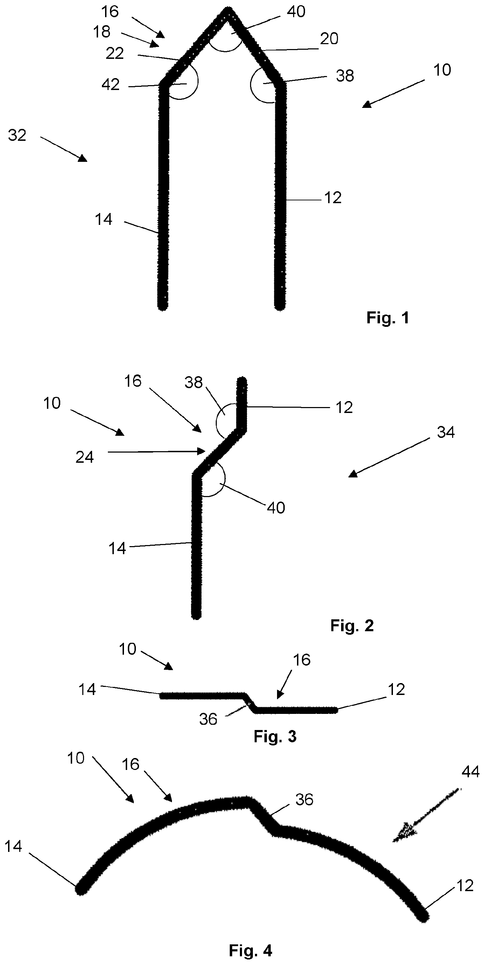

In den Figuren 1 und 2 sind zwei unterschiedliche Ausführungsformen eines Drahts 10 gezeigt, der zu einem Spulensegment eines Maschinenelements einer elektrischen Maschine umgeformt werden soll. Der Draht 10 weist bei den gezeigten Ausgestaltungen einen ersten Schenkel 12, einen zweiten Schenkel 14 und einen abgewinkelten Abschnitt 16 auf.

Bei der Ausgestaltung von Figur 1 ist der Draht haarspangenförmig oder U-förmig gebogen, wobei der abgewinkelte Abschnitt 16 als Dachbiegung 18 mit einem ersten Dachschenkel 20 und einem zweiten Dachschenkel 22 ausgebildet ist. Der erste Dachschenkel 20 und der zweite Dachschenkel 22 sind zueinander abgewinkelt. Bei anderen, hier nicht näher dargestellten Ausführungsformen ist eine unterschiedliche Anzahl an Dachschenkeln 20, 22 und eine unterschiedliche Anzahl von Biegungen in oder an dem abgewinkelten Abschnitt 16 möglich. Durch die Dachform des abgewinkelten Abschnitt 16 verlaufen der erste Schenkel 12 und der zweite Schenkel 14 mit einem Abstand so dazwischen im Wesentlichen parallel zueinander, wobei deren Laufrichtung entlang des Drahtes 10 gesehen um 180° entgegengesetzt ist.

Bei der Ausgestaltung von Figur 2 ist der abgewinkelte Abschnitt 16 als Kröpfung 24 ausgebildet. Die Schenkel 12, 14 laufen mit dem Abstand so versetzt zueinander, jedoch in Richtung entlang des Drahtes 10 in der gleichen Richtung. Die Ausgestaltung des Drahtes 10 gemäß Figur 1 wird wegen der Haarnadelform auch als Hairpin 32 oder als U-Pin bezeichnet. Die Ausgestaltung gemäß Figur 2 wird wegen des gradlinigen Verlaufes der Schenkel 12, 14 zueinander auch als I-Pin 34 bezeichnet.

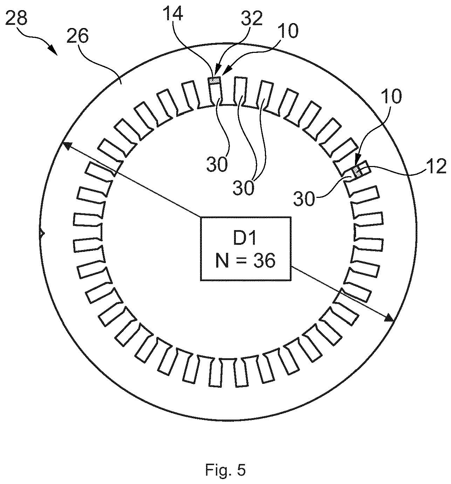

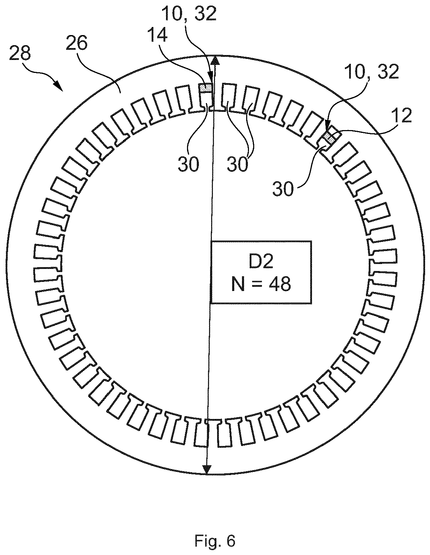

Die Figuren 5 und 6 zeigen zwei Ausführungsbeispiele für ein Statorblechpaket 26 zum Bilden eines Stators 28 eines Elektromotors als Beispiel für das Maschinenelement der elektrischen Maschine. Das Statorblechpaket 26 ist mit einer Anordnung von über dem Umfang verteilt angeordneten Nuten 30 an dessen Innenseite versehen, in die die Schenkel 12, 14 der Drähte 10 als Spulensegmente einzusetzen sind, um hierdurch nach entsprechendem Umformen und Verbinden Spulenwicklungen zu bilden. Dabei stehen die Dachbiegungen 18 der einzelnen Drähte 10 an einem Ende des Statorblechpakets 26 hervor, die freien Enden der Schenkel 12, 14 werden durch Verschränken in Umfangsrichtung umgeformt und dann mit Schenkeln anderer Drähte 10 verbunden, um so die Spulenwicklungen zu bilden. Damit die Drähte 10 eine möglichst hohe Packungsdichte erreichen und passend eingesetzt werden können, sollen die abgewinkelten Abschnitte 16 entsprechend bereits vorgeformt werden, bevor die Drähte 10 in das Statorblechpaket 26 eingesetzt werden. Die abgewinkelten Abschnitte 16 und insbesondere die Dachbiegungen 18 bilden dann die Wicklungsköpfe der Spulensegmente. Die I-Pins von Figur 2 können hierbei an einigen Stellen an Stelle der Hairpins 32 von Figur 1 eingesetzt werden, um so z. B. Anschlüsse oder Sonderpins zu bilden. Auch die I-Pins sollten daher im abgewinkelten Abschnitt 16 entsprechend vorher geformt werden.

In den Figuren 5 und 6 sind jeweils der erste Schenkel 12 und der zweite Schenkel 14 eines Hairpins 32 in entsprechende Nuten eingesetzt. Beispielsweise sind pro Nut 30 insgesamt vier Spulensegmente, also vier Drähte 10 mit ihren entsprechenden Schenkeln 12, 14 aufgenommen. Dabei sind der erste Schenkel 12 und der zweite Schenkel 14 nicht nur in Umfangsrichtung, sondern auch in der radialen Lage versetzt zueinander. Der erste Schenkel 12 ist in dem Beispiel der Figuren 5 und 6 an radial äußerster Lage eingesetzt, der zweite Schenkel 14 ist in an dem Beispiel der Figuren 5 und 6 an der zweit-äußersten radialen Lage eingesetzt. Um den entsprechenden Sprung in der radialen Lage bei möglichst hoher Packungsdichte zu verwirklichen, ist in dem abgewinkelten Abschnitt 16 eine Sprungbiegung 36 vorgesehen, wie dies in Figur 3 dargestellt ist. Figur 3 ist eine Ansicht der jeweiligen Drähte 10 aus der Figur 1 von oben in Figur 1 gesehen. Zum Beispiel hat die Dachbiegung 18 zwischen den beiden Dachschenkeln 20, 22 eine Sprungbiegung 36 in Form der in Figur 3 gezeigten Sprungbiegungskröpfung.

Wie in Figur 1 dargestellt, weisen die Hairpins 32 die sogenannte Dachbiegung 18 auf. Demnach ist der Draht 10 in dem abgewinkelten Abschnitt 16 so gebogen, dass er den ersten Schenkel 12 und den zweiten Schenkel 14 aufweist, die im Wesentlichen parallel zueinander verlaufen und auf einer Seite über einen dachförmigen Teil des Drahtes 10 miteinander verbunden sind. Der in Figur 1 dargestellte Hairpin 32 weist mehrere Winkel 38, 40, 42 auf, aus denen sich die Dachform ergibt, die auch als Hausdachform bezeichnet wird. Dabei können die Winkel 38, 40, 42 und Schenkellängen, sowohl der Schenkel 12, 14 als auch der Dachschenkel 20, 22 - je nach der erforderlichen Form variieren. Die Variation kann auch innerhalb der Drähte 10 der Spulenwicklung des Stators 28 variieren. Ferner ist es erforderlich, je nach Anforderung Drähte 10 mit verschiedenen Drahtquerschnitten herzustellen oder die Drähte mit unterschiedlichen Querschnitten zu verarbeiten.

Die in Figur 1 dargestellte Dachbiegung wird durch ein zweidimensionales Biegen (im folgenden 2D-Biegen bezeichnet) erreicht, wie es näher in der DE10 2018 106 980 A1 beschrieben und gezeigt ist. Es wird für weitere Einzelheiten zum Biegen der Dachform beziehungsweise der Dachbiegung 18 ausdrücklich auf diese Druckschrift verwiesen. Das Durchführen der in Figur 3 gezeigten Sprungbiegung 36 ist im Einzelnen in der DE10 2018 106 978 A1 beschrieben und gezeigt, so dass für weitere Einzelheiten hinsichtlich der Sprungbiegung 36 auf diese Druckschrift verwiesen wird.

Wie weiter in den Figuren 5 und 6 gezeigt, hat das Statorblechpaket 26 zwischen den Nuten 30, in die der erste Schenkel 12 und der zweite Schenkel 14 einzusetzen ist, eine bogenförmige Form, an die der abgewinkelte Abschnitt 16 entsprechend bogenförmig anzupassen ist, um eine entsprechend hohe Packungsdichte der Dachbiegungen 18 erreichen zu können und so einen kompakten Aufbau des Stators 28 zu ermöglichen. Weiter sind, wie in den Figuren 5 und 6 gezeigt, die Nuten 30, in die der erste Schenkel 12 und der zweite Schenkel 14 einzusetzen sind in ihrer Ausrichtung zueinander abgewinkelt, so dass der erste Schenkel 12 und der zweite Schenkel 14 einen entsprechenden Winkel zueinander aufweisen sollten. Auch dieser Winkel soll über eine entsprechende Formung der Dachbiegung 18 erreicht werden. Hierzu wird der Draht 10, nachdem er in eine der in Figur 1 und 2 gezeigten Formen durch 2D-Biegen geformt ist und in die in Figur 3 gezeigte Form mit Sprungbiegung 36 gebogen ist, entsprechend dreidimensional gebogen werden, so dass eine Freiform entsteht, wie sie in Figur 4 dargestellt ist. Figur 4 zeigt eine Ansicht vergleichbar wie Figur 3 des Drahtes 10 von oben in Figur 1 nach dem Durchführen der Freiformbiegung. Die Freiformbiegung wird durch ein 3D-Biegen 44 erreicht.

Im Folgenden sollen Ausführungsbeispiele einer 3D-Biegevorrichtung zum Durchführen eines solches 3D-Biegens 44 und ein 3D-Biegeverfahren zum Durchführen des 3D-Biegens 44 anhand der Figuren 5 - 10 erläutert werden.

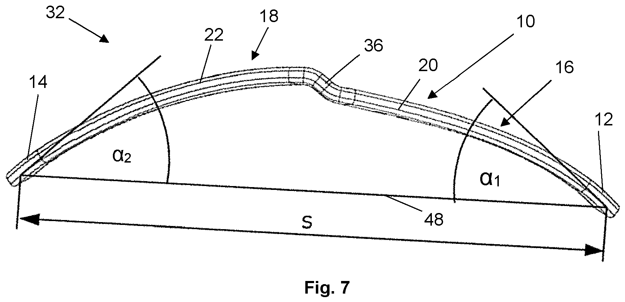

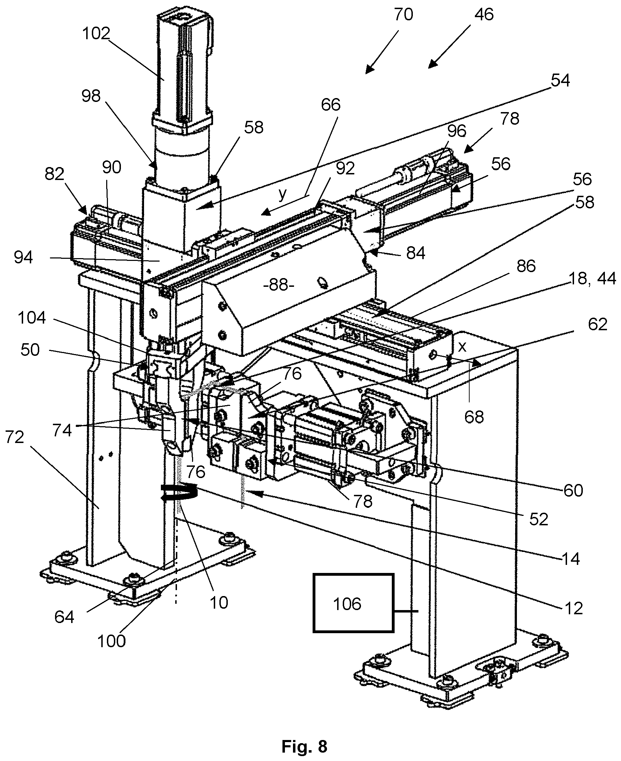

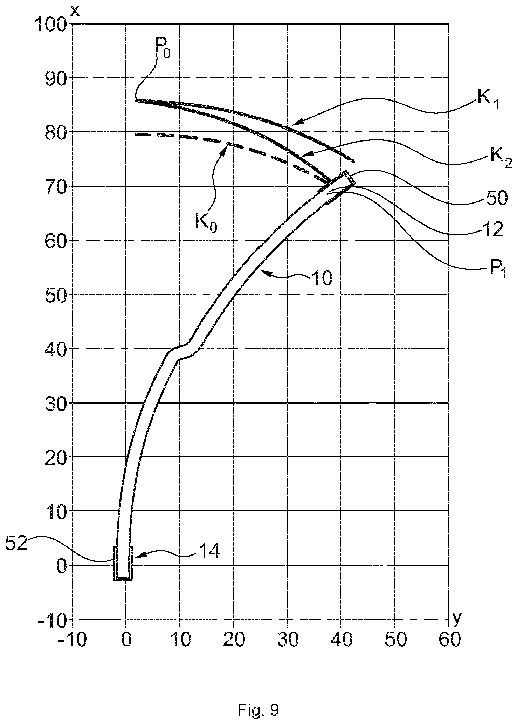

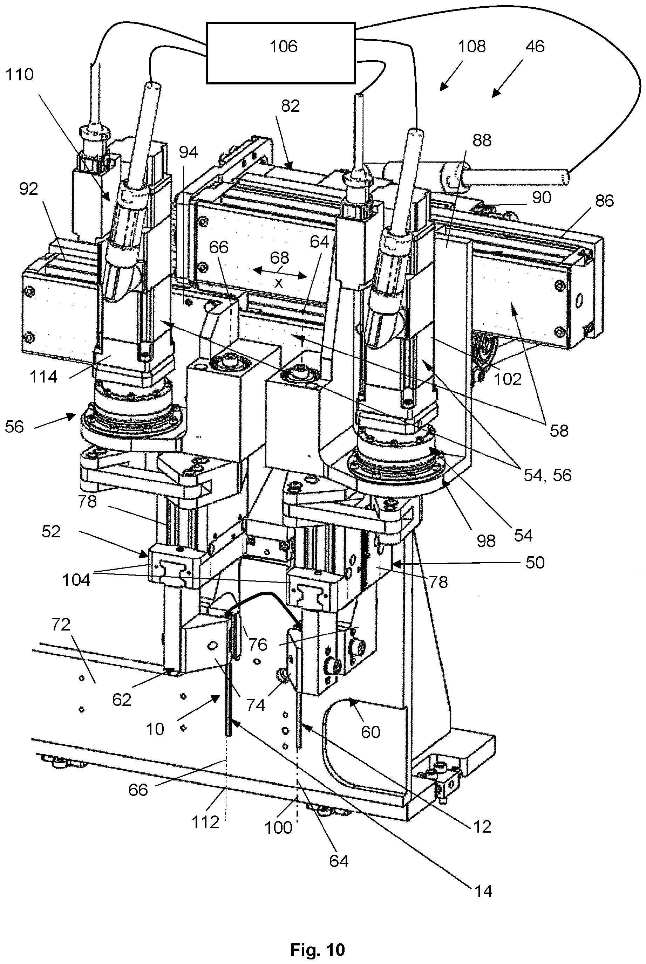

Figur 7 zeigt dabei einen bereits durch 3D-Biegen gebogenen Draht 10 in Form eines Hairpins 32 von oben auf die Dachbiegung 18 gesehen (vergleichbar zu Figur 4). Figur 8 zeigt eine erste Ausführungsform der 3D-Biegevorrichtung 46. Figur 9 zeigt einen Graphen zum Verdeutlichen eines Einstellens der ersten Ausführungsform der 3D-Biegevorrichtung 46. Figur 10 zeigt eine zweite Ausführungsform der 3D-Biegevorrichtung 46.

Die Figuren 5 und 6 zeigen zwei unterschiedliche Ausführungsformen für den Stator 28, bei denen das Statorblechpaket 26 unterschiedliche Durchmesser D1, D2 und eine unterschiedliche Anzahl N von Nuten 30 aufweisen. Beispielsweise weist das Statorblechpaket 26 von Figur 5 einen Durchmesser D1 von 170mm und N=36 Nuten 30 auf, während das Statorblechpaket 26 von Figur 6 einen Durchmesser D2 von 220mm und N=48 Nuten 30 aufweist. Dies sind selbstverständlich nur Beispielwerte, es können ganz unterschiedliche Dimensionen und ganz unterschiedliche Anzahl N von Nuten 30 vorgesehen sein. Wie jedoch das Beispiel der eingesetzten Schenkel 12, 14 bei den unterschiedlichen Statoren 28 von Figur 5 und 6 zeigt, gibt es unterschiedliche Positionen der Schenkel 12, 14 der Hairpins 32 bei den beiden Statoren sowie unterschiedliche Torsionswinkel der Schenkel 12, 14 zueinander. Auch kann der Abstand s der Schenkel 12, 14 unterschiedlich sein.

Das 3D-Biegen 44 muss so erfolgen, dass die gewünschten Parameter α₁, α₂, s für das passende Einsetzen der Schenkel 12, 14 in die Nuten 30 für den jeweiligen Stator 28 erzielt werden.

Wie in Figur 7 gezeigt, muss somit durch das 3D-Biegen ein erster Torsionswinkel α₁ des ersten Schenkels 12 relativ zu einer gedachten Verbindungslinie 48 zwischen den Mittelachsen der Schenkel 12, 14 eingestellt werden. Weiter muss ein zweiter Torsionswinkel α₂ des zweiten Schenkels 14 zu der gedachten Verbindungslinie 48 eingestellt werden. Nach dem 3D-Biegen soll der Abstand zwischen den Mittelachsen der Schenkel 12, 14 - entlang der gedachten Verbindungslinie 48 - einem vorbestimmten Abstand s entsprechen. Vor dem 3D-Biegen 44 hat der Draht 10 schon zwei Biegeprozesse erfahren, nämlich das vorerwähnte Dachbiegen und das Sprungbiegen.

Mittels der 3D-Biegevorrichtung 46 können folgende Parameter möglichst unabhängig voneinander verändert werden:
- Schenkelwinkel oder Torsionswinkel α₁ des ersten Schenkels
- Schenkelwinkel oder Torsionswinkel α₂ des zweiten Schenkels
- Abstand der Schenkel s nach der Biegung bzw. der Unterschied s-so vor und nach der Biegung
- Ausprägung der Dachform bzw. Form der Dachbiegung 18.

Die Ausprägung der Dachform kann z. B. die Form der Krümmung (siehe Figur 4) und/oder die Höhe der Dachbiegung 18 und/oder die Größe der Winkel 38, 40, 42 der Dachbiegung 18 beinhalten.

Bei der in Figur 8 dargestellten Ausführungsform der 3D-Biegevorrichtung 46 wird einer der Schenkel 12, 14, beispielsweise der zweite Schenkel 14, fixiert. Eine solche Ausführungsform ist insbesondere bei derartigen Herstellanlagen für Statoren 28 vorteilhaft, bei der für eine Serienproduktion von Statoren 28 (Serienanlagen) einer der Schenkel 12, 14 durch das Transportsystem gehalten wird. Insofern ist eine feste Übergabestelle und/oder eine feste Position des zu fixierenden Schenkels 14 vorteilhaft. Beispielsweise ist eine Serienanlage vorgesehen, bei der einer der Schenkel 14 durch das Transportsystem (nicht gezeigt) gehalten wird und somit nicht bewegt werden kann. Daher ist bei dieser Ausgestaltung von Figur 8 der 3D-Biegevorrichtung 46 vorgesehen, dass das 3D-Biegen allein durch Bewegung des freien anderen Schenkels 12 erfolgen kann. Figur 10 zeigt eine Ausführungsform der 3D-Biegevorrichtung 46, bei der sowohl der erste Schenkel 12 als auch der zweite Schenkel 14 beim 3D-Biegen 44 bewegt werden.

Beide Ausgestaltungen der 3D-Biegevorrichtung 46 dienen zum Biegen des Drahts 10 in eine dreidimensionale Form und umfassen ein erstes Halteelement 50, ein zweites Halteelement 52 und wenigstens eine erste bis dritte Relativbewegungsvorrichtung 54, 56, 58.

Die Halteelemente 50, 52 weisen jeweils vorzugsweise einen Greifer 60, 62 auf. Das erste Halteelement 50 kann mit dem ersten Greifer 60 den ersten Schenkel 12 erfassen und ist somit zum Halten des Drahts 10 an dem ersten Schenkel 12 ausgebildet. Das zweite Halteelement 52 kann mit dem zweiten Greifer 62 den zweiten Schenkel 14 erfassen und ist somit zum Halten des Drahts 10 an dem zweiten Schenkel 14 ausgebildet.

Das erste Halteelement 50 und das zweite Halteelement 52 sind mittels der ersten Relativbewegungseinrichtung 54 in einer ersten Relativbewegung mit einer ersten Bewegungsachse 64 bewegbar, um so den ersten Schenkel 12 relativ zu der gedachten Verbindungslinie 48 zu tordieren und so den ersten Torsionswinkel α₁ als Torsionswinkel des ersten Schenkels 12 einzustellen.

Entsprechend erlaubt die zweite Relativbewegungseinrichtung 56 eine Relativbewegung des ersten Halteelements 50 und des zweiten Halteelements 52 mit einer zweiten Bewegungsachse 66 so, dass der zweite Schenkel 14 relativ zu der gedachten Verbindungslinie 48 tordiert wird, um so den zweiten Torsionswinkel α₂ als Torsionswinkel des zweiten Schenkels 14 einzustellen.

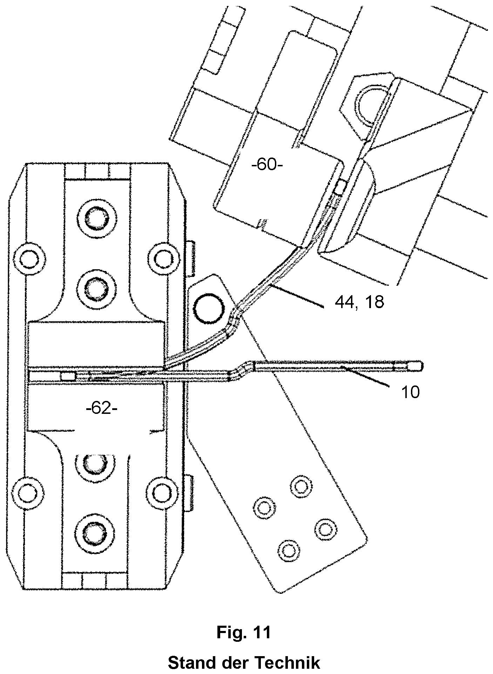

Die 3D-Biegevorrichtung 46 weist aber noch eine dritte Relativbewegungseinrichtung 58 auf, mittels der das erste Halteelement 50 und das zweite Halteelement 52 mit einer dritten Bewegungsachse 68 relativ zueinander so bewegbar sind, dass der im Endzustand der 3D-Biegung 44 zu erzielende Abstand s zwischen den Mittelachsen der Schenkel 12, 14 unabhängig von den Torsionswinkeln α₁, α₂ einstellbar ist. Im Unterschied zu der in Figur 11 dargestellten bekannten Vorrichtung, bei der um zwei vertikal im Raum liegende Achsen geschwenkt wird, werden bei der 3D-Biegevorrichtung 46 gemäß den Figuren 8 und 10 die Schenkel 12, 14 des Drahts 10 definiert verdreht, so dass ein definierter Torsionswinkel α₁ und α₂ zwischen Schenkel und Sekante - gedachte Verbindungslinie 48 - des Drahts 10, insbesondere des Hairpins 32, entsteht. Gleichzeitig kann der Abstand s der Schenkelachsen definiert werden. Zusätzlich kann durch einen Ablauf der Änderung des Abstands über die Biegung die Ausformung der Dachbiegung 18 beziehungsweise des abgewinkelten Abschnitts 16 bestimmt werden.

Damit der Abstand s der Schenkel 12, 14 am Ende der 3D-Biegung 44 unabhängig von den Schenkelwinkel α₁, α₂ bestimmt werden kann, ist bei der 3D-Biegevorrichtung 46 vorgesehen, dass die Schenkel 12, 14 mit drei Freiheitsgraden - erste bis dritte Bewegungsachse 64, 66, 68 - zueinander bewegt werden können.

Die erste und zweite Relativbewegungseinrichtung 54, 56 sind derart ausgebildet, dass jeweils die Torsion um einen Schenkel 12, 14 vorzugsweise um die Drahtmittelachse erfolgt. So führt eine Drehbewegung des Schenkels 12, 14 nicht zur Änderung des Abstands s der Schenkel 12, 14.

Zwei Ausgestaltungen der 3D-Biegevorrichtung 46 sind in den Figuren 8 und 10 dargestellt. Bei der Ausgestaltung nach Figur 10 werden beide Schenkel 12, 14 jeweils um eine Achse tordiert und können im Abstand - dritte Achse - positioniert werden. Bei der Ausgestaltung nach Figur 8 bleibt ein Schenkel 14 fixiert und der andere Schenkel 12 wird in zwei Achsen positioniert und um eine dritte Achse tordiert. Diese Ausgestaltung eignet sich insbesondere für eine Serienanlage mit einem Transport der Hairpins oder sonstigen Drähten 10 mittels eines Transportsystems.

Die in Figur 8 dargestellte 3D-Biegevorrichtung 46 ist als Biegeeinheit 70 zum 3D-Biegen 44 mit einem festen Schenkel 14 ausgebildet. Die 3D-Biegevorrichtung 46 weist ein Maschinenbett oder einen Maschinenrahmen 72 auf, an dem das zweite Halteelement 52 befestigt ist und somit unbeweglich ist. An dem zweiten Halteelement 52 befindet sich der zweite Greifer 62, der in der Lage unbeweglich ist und somit ein fester Greifer ist.

Der erste und der zweite Greifer 60, 62 weisen jeweils aufeinander zu und voneinander weg bewegliche Greiferbacken 74,76 und einen oder mehrere Aktoren 78 zum aufeinander-zu-Bewegen der Greiferbacken 74, 76 und voneinander-weg-Bewegen der Greiferbacken 74, 76 auf.

Bei dem als fester Greifer in Figur 8 ausgebildeten zweiten Greifer 62 lassen sich so die Greiferbacken 74, 76 in eine Haltestellung bringen, in der der zweite Schenkel 14 über den ganzen 3D-Biegeprozess in einer fest vorgegebenen Position gehalten wird.

Die Biegeeinheit 70 mit fixiertem Schenkel 14 weist weiter einen Kreuzschlitten 80 mit einer ersten Linearbewegungseinrichtung 82 zum Bewegen des ersten Halteelements 50 in Richtung einer ersten Linearbewegungsachse x und einer zweiten Linearbewegungseinrichtung 84 zum Bewegen des ersten Halteelements 50 in Richtung einer zweiten Linearbewegungsachse y auf.

Die erste Linearbewegungseinrichtung 82 weist eine in x-Richtung gerichtete erste Führungseinrichtung 86 zum Führen eines ersten Schlittenelements 88 und einen ersten Linearbewegungsaktor 90 zum Antreiben der Bewegung des ersten Schlittenelements 88 in Richtung der ersten Linearbewegungsachse x auf.

Die zweite Linearbewegungseinrichtung 84 weist eine y-Richtung gerichtete zweite Führungseinrichtung 92 an dem ersten Schlittenelement 88 zum Führen eines zweiten Schlittenelements 94 und einen zweiten Linearbewegungsaktor 96 zum Antreiben dieser Bewegung des zweiten Schlittenelements in Richtung der zweiten Linearbewegungsachse y auf.

An dem zweiten Schlittenelement 94 ist eine erste Dreh- oder Verschwenkeinrichtung 98 zum Drehen oder Verschwenken des ersten Halteelements 50 um eine erste Dreh- oder Verschwenkachse 100 angeordnet. Diese erste Dreh- oder Verschwenkeinrichtung 98 weist einen ersten Drehaktor 102 zum Antreiben der Drehbewegung des ersten Halteelements 50 auf.

Das erste Halteelement 50 weist ein entsprechendes drehbares Basiselement 104 auf, an dem der Aktor 78 sowie die Greiferbacken 74, 76 des ersten Greifers 60 angeordnet sind. Entsprechend weist das Basiselement 104 eine Schiebeführung für die Greiferbacken 74, 76 auf. Zwischen den Greiferbacken 74, 76 des zweiten Greifers 62 lässt sich in der Haltestellung der erste Schenkel 12 des Drahtes halten. Der erste Greifer 62 ist dabei so ausgebildet, dass der erste Schenkel 12 so gehalten wird, dass seine Mittelachse auf der ersten Dreh- oder Verschwenkachse 100 liegt.

Weiter weist die 3D-Biegevorrichtung 46 eine Steuerung 106 auf, mittels der die Aktoren 78, 90, 96, 102 anhand darin gespeicherter oder geladener Computersoftware gesteuert werden können. Das Steuern erfolgt so, dass mittels der ersten Dreh- oder Verschwenkeinrichtung 98 der erste Torsionswinkel α₁ des ersten Schenkels eingestellt wird, während das erste Halteelement 50 über den Kreuzschlitten 80 durch Bewegung in Richtung der ersten Linearbewegungsachse x und in Richtung der zweiten Linearbewegungsachse y entsprechend einer vorerrechneten und somit vorgegebenen Bewegungskurve K₂ sowohl der zweite Torsionswinkel α₂ des zweiten Schenkels 14 als auch der Abstand s zwischen den Schenkeln 12, 14 eingestellt wird.

Die erste Relativbewegungseinrichtung 54 wird somit durch die erste Dreh- oder Verschwenkeinrichtung 98 gebildet. Die zweite Relativbewegungseinrichtung 56 nützt zum größeren Anteil die Bewegung in Richtung der zweiten Linearbewegungsachse y und wird somit hauptsächlich durch die zweite Linearbewegungseinrichtung 84 gebildet. Die dritte Relativbewegungseinrichtung 58 wird durch das Vorsehen der dritten Bewegungsachse 78 und somit durch das Vorsehen der Bewegung in Richtung der ersten Linearbewegungsachse x ermöglicht. Somit wird die dritte Relativbewegungseinrichtung 58 im Wesentlichen durch die erste Linearbewegungseinrichtung 82 gebildet.

Nachdem über den Kreuzschlitten 80 zweidimensional in der x-y-Ebene jeder Punkt angefahren werden kann und somit auch beliebige Kurven innerhalb der x-y-Ebene durchgefahren werden können, ist die tatsächliche Ausrichtung der ersten Linearbewegungsachse x und der zweiten Linearbewegungsachse y beliebig, solange dadurch eine Ebene aufgespannt wird, sie also nicht parallel oder zusammenfallend verlaufen. Für die Realisierung der Relativbewegungseinrichtungen 54, 56, 58 kommt es gemäß dieser Ausgestaltung der 3D-Biegevorrichtung 46 lediglich darauf an, dass entsprechend drei Freiheitsgrade zur Bewegung in der x-y-Ebene und zum Verdrehen oder Verschwenken um eine vorzugsweise senkrecht dazu stehende z-Achse - erste Drehachse 100 - vorgesehen werden. Bei einer Variante könnte zum Beispiel der Kreuzschlitten 80, der nach dem kartesischen Koordinatensystem in der x-y-Bewegungsebene arbeitet, durch jeden anderen Mechanismus zur Abfahren einer frei einstellbaren Kurve in der x-y-Ebene ersetzt werden, z.B. einen Linearbewegungsmechanismus, der um eine Hauptdrehachse an dem Maschinenrahmen gedreht wird und der somit nach dem Zylinderkoordinatensystem arbeitet.

Der erste Greifer 60 ist so ausgeformt, dass der Draht 100 so geklemmt wird, dass die Mittelachse des beweglichen ersten Schenkels 12 in der Drehachse 100 des Greifers 60 liegt. Alternativ kann auch das Verfahren zum Biegen angepasst werden und damit eine versetzte Mittelachse des Drahtes 10 zur Torsionsachse 100 kompensiert werden.

Das auf der Biegeeinheit 70 gemäß Fig. 8 durchzuführende 3D-Biegeverfahren zur 3D-Biegung mit einem festen Schenkel 14 wird im Folgenden anhand der Darstellung in Figur 9 erläutert.

Figur 9 zeigt eine Draufsicht auf die x-y-Ebene mit Einheiten in x- und y-Richtung in Millimetern. Als Nullpunkt ist hier die Mittelachse des als festen Schenkel wirkenden zweiten Schenkels 14 gewählt. Die Mittelachse wird durch das Halten des zweiten Schenkels 14 mittels des zweiten Greifers 62 in ihrer Lage fixiert.

Im Ausgangszustand befindet sich der erste Schenkel 12 an der Position Po, die durch den Ursprungsabstand so zwischen den Schenkeln 12, 14 nach der Dachbiegung und der Sprungbiegung bestimmt ist. Die Kurve K₀ zeigt den Radius mit Abstand so der Schenkel 12, 14 im Ausgangszustand an. Es wird dabei auf die Mitte der Greifer 60, 62 Bezug genommen. Beispielsweise beträgt der Abstand so der Schenkel 12, 14 im Ausgangszustand 86mm, entsprechend wäre als Kurve K₀ ein Kreis mit Radius 86mm angegeben. Weiter sei als Beispiel angenommen, dass als im Endzustand gewünschter Abstand s zwischen den Schenkeln 12, 14 80mm vorgegeben ist. Die Kurve K₁ hat einen Radius mit einem solchen Abstand s der Schenkel 12, 14 im Endzustand.

Als Bewegungskurve K₂ des ersten Greifers 60 relativ zu dem zweiten Greifer 62 wird nun eine Übergangskurve zwischen den beiden Radien K₀ und K₁ gewählt, die an der Position P₀ am Ausgangszustand beginnt und an der gewünschten Endposition P₁ des ersten Schenkels 12 relativ zu dem zweiten Schenkel 14 endet. Dies bildet die Kurve K₂ der Freiformung, welche als Bewegungskurve für die Bewegung des ersten Greifers 60 in der x-y-Ebene einprogrammiert wird. Diese Bewegungskurve K₀ wird entsprechend durch die Linearbewegungseinrichtungen 82, 84 nachgefahren. Gleichzeitig wird durch Drehung des ersten Greifers 60 um die erste Drehachse 100 der Torsionswinkel α₁ des ersten Schenkels 12 eingestellt. Der Torsionswinkel α₂ des zweiten Schenkels 14 ergibt sich durch die Kurve K₂ der Freiformung.

Mit diesen Vorgaben kann die Programmierung der Steuerung 106 leicht erfolgen.

In Figur 10 ist eine zweite Ausführungsform der 3D-Biegevorrichtung 46 dargestellt, die als Biegeeinheit 108 zum 3D-Biegen mit zwei beweglichen Schenkeln 12, 14 ausgebildet ist. Auch diese Ausgestaltung der 3D-Biegevorrichtung 46 weist ein Maschinenbett oder Maschinenrahmen 72 auf, an dem die Linearbewegungseinrichtung 82 zum Relativbewegen des ersten Halteelements 50 und des zweiten Halteelements 52 in Richtung der ersten Linearbewegungsachse x angeordnet ist. Hierzu ist an dem Maschinenrahmen 72 die erste Führungseinrichtung 86 ausgebildet, auf der das erste Schlittenelement 88 in Richtung der ersten Linearbewegungsachse x beweglich ist. Weiter weist die Linearbewegungseinrichtung 82 zum Relativbewegen der Halteelemente 50, 52 in Richtung der Linearbewegungsachse x die zweite Führungseinrichtung 92 auf, die hier aber ebenfalls an dem Maschinenrahmen 72 befestigt ist und ebenfalls in x-Richtung ausgerichtet ist, um auch das zweite Schlittenelement 94 in Richtung dieser ersten Linearbewegungsachse x zu bewegen.

Bei einer Ausgestaltung können das erste Schlittenelement 88 und das zweite Schlittenelement 94 mittels eines gemeinsamen ersten Linearbewegungsaktors 90 über ein Getriebe (nicht dargestellt) bewegt werden, welches eine Antriebsbewegung des ersten Linearbewegungsaktors 90 in gegenläufige Bewegungen der Schlittenelemente 88, 94 umsetzt. Bei einer anderen Ausführungsform ist das erste Schlittenelement 88 mittels eines ersten Linearbewegungsaktors 90 bewegbar, und das zweite Schlittenelement 94 ist mittels eines zweiten Linearbewegungsaktors 96 bewegbar. Eine gegenläufige Bewegung des ersten Halteelements 50 und des zweiten Halteelements 52 kann durch entsprechende Ansteuerung der Linearbewegungsaktoren 90, 96 durch die Steuerung 106 erfolgen.

An dem ersten Schlittenelement 88 ist die erste Dreh- oder Verschwenkeinrichtung 98 angeordnet, die mittels des ersten Drehaktors 102 eine Verdrehung des ersten Halteelements 50 um die erste Dreh- oder Verschwenkachse 100 ermöglicht. An dem zweiten Schlittenelement 94 ist eine zweite Dreh- oder Verschwenkeinrichtung 110 angebracht, mittels der das zweite Halteelement 52 um eine zweite Dreh- oder Verschwenkachse 112 verdreht oder verschwenkt werden kann. Zum Antreiben dieser Bewegung weist die zweite Dreh- oder Verschwenkeinrichtung 110 einen zweiten Drehaktor 114 auf.

Die Halteelemente 50, 52 sind bei dieser Ausgestaltung gleich oder spiegelbildlich ausgestaltet. Auf dem Basiselement 104 findet sich eine Führung und der Aktor 78 für die jeweiligen Greiferbacken 74, 76. Der erste und der zweite Greifer 60, 62 sind so ausgebildet, dass der jeweilige Schenkel 12, 14 so gehalten werden kann, dass seine jeweilige Mittelachse mit der jeweiligen Dreh- oder Verschwenkachse 100, 112 zusammenfällt. Auch hier kann alternativ bei nicht mit den Mittelachsen zusammenfallenden Drehachsen 100, 112 eine Kompensation über entsprechende Bewegungsmuster erfolgen.

Die Steuerung 106 ist zum Ansteuern der Aktoren 78, 90, 96, 102, 114 ausgebildet und so programmiert, dass das 3D-Biegen 44 mit wenigstens drei Freiheitsgraden durchführbar ist.

Die erste Dreh- oder Verschwenkeinrichtung 98 bildet dabei die erste Relativbewegungseinrichtung 54 mit der ersten Dreh- oder Verschwenkachse 100 als erste Bewegungsachse 64. Die zweite Dreh- oder Verschwenkeinrichtung 110 bildet dabei die zweite Relativbewegungseinrichtung 56 mit der zweiten Dreh- oder Verschwenkachse 112 als zweite Bewegungsachse 66. Die Linearbewegungseinrichtung 82 zum Relativbewegen der Halteelemente 50, 52 in Richtung der erste Linearbewegungsachse x bildet die dritte Relativbewegungseinrichtung 58 mit der ersten Linearbewegungsachse x als dritte Bewegungsachse 68.

Die Biegeeinheit 108 zum Biegen mit den zwei beweglichen Schenkeln 12, 14 weist somit eine erste und eine parallele zweite Linearachse für eine gegenläufige aufeinander-zu-Bewegung und voneinander-weg-Bewegung des ersten Greifers 60 und des zweiten Greifers 62, eine erste Torsionsachse - erste Dreh- oder Verschwenkachse 100 - zum Einstellen der ersten Torsionswinkel α₁ und eine zweite Torsionsachse - zweite Dreh- oder Verschwenkachse 112 - zur Einstellung des zweiten Torsionswinkels α₂ auf.

Das 3D-Biegen 44 mit der Biegeeinheit 108 für die Biegung mittels zwei beweglichen Schenkeln 12, 14 erfolgt derart, dass die beiden Dreh- oder Verschwenkeinrichtungen 98, 110 um die jeweilige Mittelachse - Drahtachse - der Schenkel 12, 14 schwenken. Gleichzeitig werden die Schlittenelemente 88, 94 zueinander bewegt.

Anstelle der Schlittenelemente 88, 94 kann die Relativbewegung der Halteelemente 50, 52 auch auf jede andere mögliche Art der Bewegung entlang der Linearachsen erfolgen.

Bei der 3D-Bewegungsvorrichtung gemäß den Ausgestaltungen der Erfindung sind somit wenigstens drei Relativbewegungseinrichtungen 54, 56, 58 vorgesehen, um eine Relativbewegung der Halteelemente 50, 52 zum Halten der Schenkel 12, 14 mit wenigstens drei Bewegungsachsen 64, 66, 68 durchzuführen.

Figur 11 zeigt dagegen den Stand der Technik einer bisher eingesetzten 3D-Biegevorrichtung mit feststehendem Greifer 62 und um zwei Bewegungsachsen schwenkbarem beweglichem Greifer 60.

Bei dem schwenkbaren Greifer 62 kann eine elastische Verformung des zu biegenden Drahts durch Überbiegen kompensiert werden. Durch die Winkelstellung des ersten Greifers 60 und des zweiten Greifers 62 zueinander ergeben sich die jeweiligen Torsionswinkel α₁, α₂ zur Verbindungslinie der Schenkel 12, 14. Bei dem Stand der Technik nach Figur 11 stellt sich dabei ein Abstand der gebogenen Schenkel ein. Durch die feststehenden Achsen wird bei gleicher Ausgangsgeometrie und Änderung der Torsionswinkel ein anderer Schenkelabstand erhalten. Dies bedeutet, dass dann, wenn Änderungen bei den Parametern α₁, α₂, s der Freiformbiegung vorgenommen werden, der vorgelagerte Prozess des 2D-Biegens verändert werden muss. Dabei ist der Aufwand zur Parameterfindung relativ hoch. Außerdem ergibt sich die Freiform durch das Verbiegen mit den feststehenden Achsen, so dass die Form des in Freiform gebogenen abgewinkelten Abschnitts 16 festgelegt ist und nur schwer beinflussbar ist. Die Winkelstellung der beiden Greifer 60, 62 zueinander ergibt bei der bekannten 3D-Biegevorrichtung bei gleicher Ausgangssituation stets einen vorgegebenen Abstand der gebogenen Schenkel 12, 14. Aus dem Abstand der Schenkel zueinander im ungebogenen und gebogenen Zustand sowie deren Schenkelwinkel - Torsionswinkel α₁, α₂- und der Veränderung des Abstands des geschwenkten Schenkels 12 ergibt sich eine dreidimensionale Form im oberen Bereich des Drahtes. Falls diese verändert werden muss, muss ein zusätzlich bewegbares Formelement den oberen Bereich im eingespannten Zustand verbiegen.

Bei den Ausgestaltungen der 3D-Biegevorrichtung 46 gemäß Figur 8 und Figur 10 jedoch lassen sich die Eingabe-Parameter erster Torsionswinkel α₁, zweiter Torsionswinkel α₂, Startabstand s₀ der Schenkel 12, 14 und Endabstand s der Schenkel 12, 14 direkt umsetzen. Weiter ist eine Kontrolle über die Ausformung der Freiformbiegung über den Verlauf der Biegung möglich.

Durch die gezieltere Anpassung der Parameter kann der 3D-Biegeprozess unabhängiger vom 2D-Biegeprozess betrachtet werden. Das vereinfacht die Inbetriebnahme, da weniger Iterations-Schritte bei der Parameterfindung durchgeführt werden müssen. Bei einer Ausgestaltung gemäß Figur 11 konnte der Abstand der Schenkel 12, 14 beispielsweise nicht verkleinert werden, ohne die Torsionswinkel α₁, α₂ der Schenkel 12, 14 zu ändern.

Durch die gewonnenen Freiheitsgrade kann die gewünschte Drahtform gleichmäßiger geformt werden. Bei der Ausgestaltung nach Figur 11 ergaben sich durch die Winkelstellung eine Zwangslage der Schenkel 12, 14 sowie die Dachform. Ein zusätzliches Verbiegen des Daches war in vielen Fällen nötig, um die gewünschte Pinform/Drahtform zu erhalten.

Die bei den erfindungsgemäßen Ausgestaltungen der 3D-Biegevorrichtung 46 vorgesehene Entkopplung der Schenkeltorsion und der Relativposition der Schenkel zueinander lässt auch aufwendigere Freiformbiegungen zu. Zum Beispiel lassen sich so Abgänge für unterschiedliche Phasen der elektrischen Maschine mit unterschiedlichen Winkeln erreichen.

Zur Vereinfachung von Inbetriebnahme und Parameterveränderung bei einem 3D-Biegen von Drähten schafft somit die Erfindung eine 3D-Biegevorrichtung 46 und ein 3D-Biegeverfahren zum Biegen eines Drahts 10, bei denen der Draht 10 an einem ersten Schenkel 12 und einem zweiten Schenkel 14 gehalten wird und die Schenkel 12, 14 mittels einer ersten bis dritten Relativbewegungseinrichtung 54, 56, 58 in einer ersten bis dritten Relativbewegung mit einer ersten bis dritten Bewegungsachse 64, 66, 68 bewegt werden, um Torsionswinkel α₁, α₂ des ersten und zweiten Schenkels 12, 14 und einen Abstand so, s zwischen den Mittelachsen der Schenkel 12, 14 unabhängig voneinander einstellbar zu verändern. Mit anderen Worten sind bei der 3D-Biegevorrichtung und bei dem 3D-Biegeverfahren die Schenkel 12, 14 des Drahts (10) relativ zueinander um wenigstens drei Freiheitsgrade bewegbar.

### Bezugszeichenliste:

- 10: Draht
- 12: erster Schenkel
- 14: zweiter Schenkel
- 16: abgewinkelter Abschnitt
- 18: Dachbiegung
- 20: erster Dachschenkel
- 22: zweiter Dachschenkel
- 24: Kröpfung
- 26: Statorblechpaket
- 28: Stator
- 30: Nut
- 32: Hairpin
- 34: I-Pin
- 36: Sprungbiegung
- 38: erster Winkel (abgewinkelter Abschnitt)
- 40: zweiter Winkel (abgewinkelter Abschnitt)
- 42: dritter Winkel (abgewinkelter Abschnitt)
- 44: 3D-Biegen
- 46: 3D-Biegevorrichtung
- 48: gedachte Verbindungslinie
- 50: erstes Halteelement
- 52: zweites Halteelement
- 54: erste Relativbewegungseinrichtung
- 56: zweite Relativbewegungseinrichtung
- 58: dritte Relativbewegungseinrichtung
- 60: erster Greifer
- 62: zweiter Greifer
- 64: erste Bewegungsachse
- 66: zweite Bewegungsachse
- 68: dritte Bewegungsachse
- 70: Biegeeinheit (fester Schenkel)
- 72: Maschinenrahmen
- 74: erster Greiferbacken
- 76: zweiter Greiferbacken
- 78: Aktor (Greifer)
- 80: Kreuzschlitten
- 82: erste Linearbewegungseinrichtung (erste Linearbewegungsachse x)
- 84: zweite Linearbewegungseinrichtung (zweite Linearbewegungsachse y)
- 86: erste Führungseinrichtung
- 88: erstes Schlittenelementen
- 90: ersten Linearbewegungsaktor
- 92: zweite Führungseinrichtung
- 94: zweites Schlittenelement
- 96: zweiter Linearbewegungsaktor
- 98: erste Dreh- oder Verschwenkeinrichtung
- 100: erste Dreh- oder Verschwenkachse
- 102: erster Drehaktor
- 104: Basiselement
- 106: Steuerung
- 108: Biegeeinheit (zwei bewegliche Schenkel)
- 110: zweite Dreh- oder Verschwenkeinrichtung
- 112: zweite Dreh- oder Verschwenkachse
- 114: zweiter Drehaktor
- α₁: Torsionswinkel erster Schenkel
- α₂: Torsionswinkel zweiter Schenkel
- P₀: Position am Ausgangszustand
- K₀: Radius mit Abstand der Schenkel im Ausgangszustand
- K₁: Radius mit Abstand der Schenkel im Endzustand
- K₂: Kurve der Freiformung
- so: Abstand der Schenkel (Anfangszustand)
- s: Abstand der Schenkel (Endzustand)
- x: erste Linearbewegungsachse
- y: zweite Linearbewegungsachse

## Patentansprüche

1. 3D-Biegevorrichtung (46) zum Biegen eines Drahts (10), der mit einem ersten Schenkel (12), einem zweiten Schenkel (14) sowie einem abgewinkelten Abschnitt (16) zwischen den Schenkeln (12, 14) ausgebildet ist, in eine 3-dimensionale Form für die Herstellung von Maschinenelementen elektrischer Maschinen, umfassend:
ein erstes Halteelement (50) zum Halten des Drahts (10) an dem ersten Schenkel (12) und ein zweites Halteelement (52) zum Halten des Drahts (10) an dem zweiten Schenkel (14),
eine erste Relativbewegungseinrichtung (54) zum relativen Bewegen des ersten Halteelements (50) und des zweiten Halteelements (52) in einer ersten Relativbewegung mit einer ersten Bewegungsachse (64), um einen Torsionswinkel (α₁) des ersten Schenkels (12) relativ zu einer gedachten Verbindungslinie (48) zwischen den Mittelachsen der Schenkel (12, 14) zu erzeugen, und
eine zweite Relativbewegungseinrichtung (56) zum relativen Bewegen des ersten Halteelements (50) und des zweiten Halteelements (52) in einer zweiten Relativbewegung mit einer zweiten Bewegungsachse (66), um einen Torsionswinkel (α₂) des zweiten Schenkels (14) relativ zu der gedachten Verbindungslinie (48) zwischen den Mittelachsen der Schenkel (12, 14) zu erzeugen, **gekennzeichnet durch**
eine dritte Relativbewegungseinrichtung (58) zum relativen Bewegen des ersten Halteelements (50) zu dem zweiten Halteelement (52) in einer dritten Relativbewegung mit einer dritten Bewegungsachse (68), um den Abstand (so, s) zwischen den Mittelachsen der Schenkel (12, 14) zu verändern, wobei die dritte Relativbewegungseinrichtung (58) eine Linearbewegungseinrichtung (82) zum relativen Bewegen des ersten Halteelements (50) und des zweiten Halteelements (52) in Richtung einer ersten Linearbewegungsachse (x) als dritte Bewegungsachse (68) ist.

2. 3D-Biegevorrichtung (46) nach Anspruch 1,
**dadurch gekennzeichnet,**
**dass** die erste Relativbewegungseinrichtung (54) eine erste Dreh- oder Verschwenkeinrichtung (98) zum Drehen oder Verschwenken des ersten Halteelements (50) um eine erste Dreh- oder Verschwenkachse (100) als erste Bewegungsachse (64) ist.

3. 3D-Biegevorrichtung (46) nach einem der voranstehenden Ansprüche,
**dadurch gekennzeichnet,**
**dass** das zweite Halteelement (52) feststehend und das erste Halteelement (50) mittels der ersten bis dritten Relativbewegungseinrichtung (54, 56, 58) beweglich ausgebildet ist und/oder
**dass** die zweite Relativbewegungseinrichtung (56) eine Linearbewegungseinrichtung (84) zum Bewegen des ersten Halteelements (50) in Richtung einer zweiten Linearbewegungsachse (y) als zweite Bewegungsachse (56) ist.

4. 3D-Biegevorrichtung (46) nach einem der Ansprüche 1 oder 2,
**dadurch gekennzeichnet,**
**dass** die zweite Relativbewegungseinrichtung (56) eine zweite Dreh- oder Verschwenkeinrichtung (110) zum Drehen oder Verschwenken des zweiten Halteelements (50) um eine zweite Dreh- oder Verschwenkachse (112) als zweite Bewegungsachse (66) ist.

5. 3D-Biegevorrichtung (46) nach einem der Ansprüche 2 bis 4,
**dadurch gekennzeichnet,**
**dass** die jeweilige Dreh- oder Verschwenkachse (100, 112) mit wenigstens einer Richtungskomponente parallel zu der Mittelachse des ersten und/oder zweiten Schenkels (12, 14) beim bestimmungsgemäßen Gebrauch des zugeordneten Halteelements (50, 52) verläuft und/oder
**dass** die jeweilige Linearbewegungsachse (x, y) mit wenigstens einer Richtungsachse quer zu der Mittelachse des ersten und/oder zweiten Schenkels (12, 14) beim bestimmungsgemäßen Gebrauch des zugeordneten Halteelements verläuft und/oder dass die erste Linearbewegungsachse (x) zumindest mit einer Richtungskomponente senkrecht zu der zweiten Linearbewegungsachse (y) verläuft und/oder
**dass** die erste Dreh- oder Verschwenkachse (100) im Wesentlichen parallel zu der zweiten Dreh- oder Verschwenkachse (110) verläuft.

6. 3D-Biegeverfahren zum Biegen eines Drahts (10), der mit einem ersten Schenkel (12), einem zweiten Schenkel (14) sowie einem abgewinkelten Abschnitt (16) zwischen den Schenkeln (12, 14) ausgebildet ist, in eine 3-dimensionale Form für die Herstellung von Maschinenelementen elektrischer Maschinen, umfassend:
a) Tordieren des ersten Schenkels (12) um einen ersten Torsionswinkel (α₁) relativ zu einer gedachten Verbindungslinie (48) zwischen den Mittelachsen des ersten und des zweiten Schenkels (12, 14) mithilfe eines ersten Relativbewegens des ersten Schenkels (12) und des zweiten Schenkels (14) mit einer ersten Bewegungsachse (64), und
b) Tordieren des zweiten Schenkels (14) um einen zweiten Torsionswinkel (α₂) relativ zu der gedachten Verbindungslinie (48) zwischen den Mittelachsen des ersten und des zweiten Schenkels (12, 14) mithilfe eines zweiten Relativbewegens des ersten Schenkels (12) und des zweiten Schenkels (14) mit einer zweiten Bewegungsachse (66), **gekennzeichnet durch**
c) Verändern des Abstandes (s₀, s) zwischen den Mittelachsen des ersten und des zweiten Schenkels (12, 14) mithilfe eines dritten Relativbewegens des ersten und des zweiten Schenkels (12, 14) mit einer dritten Bewegungsachse (68),
wobei Schritt c) umfasst:
c1) Relativbewegen des ersten und des zweiten Schenkels (12, 14) entlang einer ersten Linearbewegungsachse (x) als dritte Bewegungsachse (68).

7. 3D-Biegeverfahren nach Anspruch 6, umfassend:
Halten des ersten Schenkels (12) mittels eines ersten Halteelements (50) und des zweiten Schenkels (14) mittels eines zweiten Halteelements (52) und Durchführen der Schritte a), b) und c) mittels Relativbewegen des ersten und zweiten Halteelements (50, 52).

8. 3D-Biegeverfahren nach einem der Ansprüche 6 bis 7,
**dadurch gekennzeichnet,**
**dass** Schritt a) umfasst:
a1) Drehen oder Verschwenken des ersten Schenkels (12) um eine erste Dreh- oder Schwenkachse (100) als erste Bewegungsachse (64).

9. 3D-Biegeverfahren nach einem der Ansprüche 6 bis 8,
**dadurch gekennzeichnet,**
**dass** Schritt b) umfasst:
b1) Festhalten des zweiten Schenkels (14) und Drehen oder Verschwenken des ersten Schenkels (12) und Verlagerung der Lage des ersten Schenkels (12) entlang einer zweiten Linearbewegungsachse (y) als zweite Bewegungsachse (66) oder
b2) Drehen oder Verschwenken des zweiten Schenkels (12) um eine zweite Dreh- oder Schwenkachse (112) als zweite Bewegungsachse (66).

10. 3D-Biegeverfahren nach einem der Ansprüche 6 bis 9,
**dadurch gekennzeichnet,**
**dass** die jeweilige Dreh- oder Verschwenkachse (100, 112) mit wenigstens einer Richtungskomponente parallel zu der Mittelachse des ersten und/oder zweiten Schenkels (12, 14) verläuft und/oder
**dass** die jeweilige Linearbewegungsachse (x, y) mit wenigstens einer Richtungskomponente quer zu der Mittelachse des ersten und/oder zweiten Schenkels (12, 14) verläuft und/oder
**dass** die erste Linearbewegungsachse (x) zumindest mit einer Richtungskomponente senkrecht zu der zweiten Linearbewegungsachse (y) verläuft und/oder dass die erste Dreh- oder Verschwenkachse (100) im Wesentlichen parallel zu der zweiten Dreh- oder Verschwenkachse (112) verläuft.

11. 3D-Biegeverfahren nach einem der Ansprüche 6 bis 10,
**dadurch gekennzeichnet,**
**dass** die Schritte a) bis c) gleichzeitig oder zumindest teilweise überlappend durchgeführt werden.

12. 3D-Biegevorrichtung (46) nach einem der Ansprüche 1 bis 5 weiter umfassend eine Steuerung (106), die dazu ausgebildet ist, die 3D-Biegevorrichtung (46) zum Durchführen des 3D-Biegeverfahrens nach einem der Ansprüche 6 bis 11 zu steuern.

13. Computerprogramm oder Computerprogrammprodukt umfassend Steueranweisungen, die, wenn in eine Steuerung (106) einer 3D-Biegevorrichtung (46) nach einem der Ansprüche 1 bis 5 oder 12 geladen, die 3D-Biegevorrichtung (46) veranlassen, das 3D-Biegeverfahren nach einem der Ansprüche 6 bis 12 durchzuführen.

## Claims

1. A 3D bending device (46) for bending a wire (10), which is formed with a first leg (12), a second leg (14) and an angled portion (16) between the legs (12, 14), into a 3-dimensional shape for the production of machine elements of electric machines, comprising:
a first holding member (50) for holding the wire (10) by the first leg (12) and a second holding member (52) for holding the wire (10) by the second leg (14),
a first relative movement device (54) for relatively moving the first holding member (50) and the second holding member (52) in a first relative movement with a first movement axis (64) in order to produce a torsion angle (α₁) of the first leg (12) relative to an imaginary connecting line (48) between the central axes of the legs (12, 14),
a second relative movement device (56) for relatively moving the first holding member (50) and the second holding member (52) in a second relative movement with a second movement axis (66) in order to produce a torsion angle (α₂) of the second leg (14) relative to the imaginary connecting line (48) between the central axes of the legs (12, 14),
**characterized by**
a third relative movement device (58) for moving the first holding member (50) relative to the second holding member (52) in a third relative movement with a third movement axis (68) in order to change the distance (so, s) between the central axes of the legs (12, 14), wherein the third relative movement device (58) is a linear movement device (82) for relatively moving the first holding member (50) and the second holding member (52) in the direction of a first linear movement axis (x) as a third movement axis (68).

2. 3D bending device (46) according to claim 1,
**characterized in that**
the first relative movement device (54) is a first rotating or pivoting device (98) for rotating or pivoting the first holding member (50) about a first rotation or pivot axis (100) as the first movement axis (64).

3. 3D bending device (46) according to any one of the preceding claims,
**characterized in that**
the second holding member (52) is designed to be fixed and the first holding member (50) is designed to be movable by means of the first to third relative movement devices (54, 56, 58) and/or
the second relative movement device (56) is a linear movement device (84) for relatively moving the first holding member (50) in the direction of a second linear movement axis (y) as the second movement axis (56).

4. 3D bending device (46) according to any one of the claims 1 or 2,
**characterized in that**
the second relative movement device (56) is a second rotating or pivoting device (110) for rotating or pivoting the second holding member (50) about a second rotation or pivot axis (112) as the second movement axis (66).

5. 3D bending device (46) according to any one of the claims 2 to 4,
**characterized in that**,
with at least one directional component, the respective rotation or pivot axis (100, 112) extends parallel to the central axis of the first and/or second leg (12, 14) during the use as intended of the associated holding member (50, 52), and/or
with at least one directional axis, the respective linear movement axis (x, y) extends transversely to the central axis of the first and/or second leg (12, 14) during the use as intended of the associated holding member, and/or
with at least one directional component, the first linear movement axis (x) extends perpendicularly to the second linear movement axis (y), and/or
the first rotation or pivot axis (100) extends substantially parallel to the second rotation or pivot axis (110).

6. 3D bending method for bending a wire (10), which is formed with a first leg (12), a second leg (14) and an angled portion (16) between the legs (12, 14), into a 3-dimensional shape for the production of machine elements of electric machines, comprising:
a) twisting the first leg (12) by a first torsion angle (α₁) relative to an imaginary connecting line (48) between the central axes of the first and the second leg (12, 14) by means of a first relative movement of the first leg (12) and the second leg (14) with a first movement axis (64),
b) twisting the second leg (14) by a second torsion angle (α₂) relative to the imaginary connecting line (48) between the central axes of the first and the second leg (12, 14) by means of a second relative movement of the first leg (12) and the second leg (14) with a second movement axis (66),
**characterized by**
c) changing the distance (so, s) between the central axes of the first and the second leg (12, 14) by means of a third relative movement of the first and the second leg (12, 14) with a third movement axis (68),
wherein step c) comprises:
c1) relatively moving the first and the second leg (12, 14) along a first linear movement axis (x) as the third movement axis (68).

7. 3D bending method according to claim 6, comprising:
holding the first leg (12) by means of a first holding member (50) and the second leg (14) by means of a second holding member (52) and carrying out the steps a), b) and c) by relatively moving the first and second holding members (50, 52).

8. 3D bending method according to any one of the claims 6 to 7,
**characterized in that**
step a) comprises:
a1) rotating or pivoting the first leg (12) about a first rotation or pivot axis (100) as the first movement axis (64).

9. 3D bending method according to any one of the claims 6 to 8,
**characterized in that**
step b) comprises:
b1) retaining the second leg (14) and rotating or pivoting the first leg (12) and displacing the position of the first leg (12) along a second linear movement axis (y) as the second movement axis (66), or
b2) rotating or pivoting the second leg (12) about a second rotation or pivot axis (112) as the second movement axis (66).

10. 3D bending method according to any one of the claims 6 to 9,
**characterized in that**,
with at least one directional component, the respective rotation or pivot axis (100, 112) extends parallel to the central axis of the first and/or second leg (12, 14), and/or
with at least one directional component, the respective linear movement axis (x, y) extends transversely to the central axis of the first and/or second leg (12, 14), and/or
with at least one directional component, the first linear movement axis (x) extends perpendicularly to the second linear movement axis (y), and/or
the first rotation or pivot axis (100) extends substantially parallel to the second rotation or pivot axis (112).

11. 3D bending method according to any one of the claims 6 to 10,
**characterized in that**
the steps a) to c) are carried out simultaneously or in an at least partially overlapping manner.

12. 3D bending device (46) according to any one of the claims 1 to 5, further comprising a control system (106) configured for controlling the 3D bending device (46) in order to carry out the 3D bending method according to any one of the claims 6 to 11.

13. A computer program or computer program product, comprising control instructions which, if uploaded into a control system (106) of a 3D bending device (46) according to any one of the claims 1 to 5 or 12, cause the 3D bending device (46) to carry out the 3D bending method according to any one of the claims 6 to 12.

## Revendications

1. Dispositif de flexion en 3D (46) pour fléchir un fil (10), qui est formé avec une première jambe (12), une deuxième jambe (14) et une partie angulaire (16) entre les jambes (12, 14), en une forme tridimensionnelle pour la production d'éléments de machine de machines électriques, comprenant:
un premier élément de maintien (50) pour maintenir le fil (10) par la première jambe (12) et un second élément de maintien (52) pour maintenir le fil (10) par la seconde jambe (14),
un premier dispositif de mouvement relatif (54) pour déplacer relativement le premier élément de maintien (50) et le deuxième élément de maintien (52) dans un premier mouvement relatif avec un premier axe de mouvement (64) afin de produire un angle de torsion (α₁) de la première jambe (12) par rapport à une ligne de connexion imaginaire (48) entre les axes centraux des jambes (12, 14),
un deuxième dispositif de mouvement relatif (56) pour déplacer relativement le premier élément de maintien (50) et le deuxième élément de maintien (52) dans un deuxième mouvement relatif avec un deuxième axe de mouvement (66) afin de produire un angle de torsion (α₂) de la deuxième jambe (14) par rapport à la ligne de connexion imaginaire (48) entre les axes centraux des jambes (12, 14),
**caractérisé par**
un troisième dispositif de mouvement relatif (58) pour déplacer le premier élément de maintien (50) par rapport au deuxième élément de maintien (52) dans un troisième mouvement relatif avec un troisième axe de mouvement (68) afin de modifier la distance (so, s) entre les axes centraux des jambes (12, 14), dans lequel le troisième dispositif de mouvement relatif (58) est un dispositif de mouvement linéaire (82) pour déplacer relativement le premier élément de maintien (50) et le deuxième élément de maintien (52) dans la direction d'un premier axe de mouvement linéaire (x) en tant que troisième axe de mouvement (68).

2. Dispositif de flexion en 3D (46) selon la revendication 1,
**caractérisé en ce que**
le premier dispositif de mouvement relatif (54) est un premier dispositif de rotation ou de pivotement (98) pour faire tourner ou pivoter le premier élément de maintien (50) autour d'un premier axe de rotation ou de pivotement (100) en tant que premier axe de mouvement (64).

3. Dispositif de flexion en 3D (46) selon l'une quelconque des revendications précédentes,
**caractérisé en ce que**
le deuxième élément de maintien (52) est conçu pour être fixe et le premier élément de maintien (50) est conçu pour être mobile au moyen des premier à troisième dispositifs de mouvement relatif (54, 56, 58) et/ou
le deuxième dispositif de mouvement relatif (56) est un dispositif de mouvement linéaire (84) pour le déplacement relatif du premier élément de maintien (50) dans la direction d'un deuxième axe de mouvement linéaire (y) en tant que deuxième axe de mouvement (56).

4. Dispositif de flexion en 3D (46) selon l'une quelconque des revendications 1 ou 2, **caractérisé en ce que**
le deuxième dispositif de mouvement relatif (56) est un deuxième dispositif de rotation ou de pivotement (110) pour faire tourner ou pivoter le deuxième élément de maintien (50) autour d'un deuxième axe de rotation ou de pivotement (112) en tant que deuxième axe de mouvement (66).

5. Dispositif de flexion en 3D (46) selon l'une quelconque des revendications 2 à 4,
**caractérisé en ce que**,
avec au moins une composante directionnelle, l'axe de rotation ou de pivotement respectif (100, 112) s'étend parallèlement à l'axe central de la première et/ou de la deuxième jambe (12, 14) pendant l'utilisation prévue de l'élément de maintien associé (50, 52) et/ou,
avec au moins un axe directionnel, l'axe de mouvement linéaire respectif (x, y) s'étend transversalement à l'axe central de la première et/ou de la deuxième jambe (12, 14) pendant l'utilisation prévue de l'élément de maintien associé et/ou,
avec au moins une composante directionnelle, le premier axe de mouvement linéaire (x) s'étend perpendiculairement au deuxième axe de mouvement linéaire (y) et/ou le premier axe de rotation ou de pivotement (100) est sensiblement parallèle au deuxième axe de rotation ou de pivotement (110).

6. Procédé de flexion en 3D d'un fil (10) formé d'une première jambe (12), d'une deuxième jambe (14) et d'une partie angulaire (16) entre les jambes (12, 14), en une forme tridimensionnelle pour la production d'éléments de machines électriques, comprenant:
a) tordre la première jambe (12) d'un premier angle de torsion (α₁) par rapport à une ligne de connexion imaginaire (48) entre les axes centraux de la première et de la deuxième jambe (12, 14) au moyen d'un premier mouvement relatif de la première jambe (12) et de la deuxième jambe (14) avec un premier axe de mouvement (64),
b) tordre la deuxième jambe (14) d'un deuxième angle de torsion (α₂) par rapport à la ligne de connexion imaginaire (48) entre les axes centraux de la première et de la deuxième jambe (12, 14) au moyen d'un deuxième mouvement relatif de la première jambe (12) et de la deuxième jambe (14) avec un deuxième axe de mouvement (66),
**caractérisé par**
c) modifier la distance (so, s) entre les axes centraux de la première et de la deuxième jambe (12, 14) au moyen d'un troisième mouvement relatif de la première et de la deuxième jambe (12, 14) avec un troisième axe de mouvement (68),
dans lequel l'étape c) comprend:
c1) le déplacement relatif de la première et de la deuxième jambe (12, 14) le long d'un premier axe de déplacement linéaire (x) en tant que troisième axe de déplacement (68).

7. Procédé de flexion en 3D selon la revendication 6, comprenant:
maintenir la première jambe (12) au moyen d'un premier élément de maintien (50) et la deuxième jambe (14) au moyen d'un deuxième élément de maintien (52) et effectuer les étapes a), b) et c) en déplaçant relativement le premier et le deuxième élément de maintien (50, 52).

8. Procédé de flexion en 3D selon l'une quelconque des revendications 6 à 7,
**caractérisé en ce que**
l'étape a) comprend
a1) la rotation ou le pivotement de la première jambe (12) autour d'un premier axe de rotation ou de pivotement (100) en tant que premier axe de mouvement (64).

9. Procédé de flexion en 3D selon l'une quelconque des revendications 6 à 8,
**caractérisé en ce que**
l'étape b) comprend
b1) retenir la deuxième jambe (14) et faire tourner ou pivoter la première jambe (12) et déplacer la position de la première jambe (12) le long d'un deuxième axe de mouvement linéaire (y) en tant que deuxième axe de mouvement (66) ou
b2) faire tourner ou pivoter la deuxième jambe (12) autour d'un deuxième axe de rotation ou de pivotement (112) en tant que deuxième axe de mouvement (66).

10. Procédé de flexion en 3D selon l'une quelconque des revendications 6 à 9,
**caractérisé en ce que**,
avec au moins une composante directionnelle, l'axe de rotation ou de pivotement respectif (100, 112) s'étend parallèlement à l'axe central de la première et/ou de la deuxième jambe (12, 14) et/ou,
avec au moins une composante directionnelle, l'axe de mouvement linéaire respectif (x, y) s'étend transversalement à l'axe central de la première et/ou de la deuxième jambe (12, 14) et/ou,
avec au moins une composante directionnelle, le premier axe de mouvement linéaire (x) s'étend perpendiculairement au deuxième axe de mouvement linéaire (y) et/ou le premier axe de rotation ou de pivotement (100) est sensiblement parallèle au deuxième axe de rotation ou de pivotement (112).

11. Procédé de flexion en 3D selon l'une quelconque des revendications 6 à 10,
**caractérisé en ce que**
les étapes a) à c) sont réalisées simultanément ou de manière à se chevaucher au moins partiellement.

12. Dispositif de flexion en 3D (46) selon l'une quelconque des revendications 1 à 5, comprenant en outre un système de commande (106) configuré pour commander le dispositif de flexion en 3D (46) afin de mettre en oeuvre le procédé de flexion 3D selon l'une quelconque des revendications 6 à 11.

13. Programme d'ordinateur ou produit de programme d'ordinateur, comprenant des instructions de commande qui, si elles sont téléchargées dans un système de commande (106) d'un dispositif de pliage 3D (46) selon l'une quelconque des revendications 1 à 5 ou 12, amènent le dispositif de pliage 3D (46) à mettre en oeuvre la méthode de pliage 3D selon l'une quelconque des revendications 6 à 12.
